# EUROPEAN PATENT APPLICATION

(11) **EP 3 179 224 A1**
(43) Date of publication of application: **14.06.2017**
(21) Application number: 16202244.6
(22) Date of filing: 05.12.2016
(51) Int. Cl.: G01L 25/00, G01L 3/04

(54) **CALIBRATED TURBINE ENGINE SHAFT TORQUE SENSING**

(30) Priority: 09.12.2015 US 201514963387
(71) Applicant: General Electric Company, Schenectady, NY 12345 (US)
(72) Inventor: JACOBS, Douglas Scott, Lynn, MA Massachusetts 01910 (US); KNOBLOCH, Aaron Jay, Niskayuna, NY New York 12309 (US); GOELLER, Robert Edward, Lynn, MA Massachusetts 01910-0002 (US); MUHAMMAD, Mudassar Ali, Lynn, MA Massachusetts 01910-0002 (US)
(74) Representative: Williams, Andrew Richard

(57) **Abstract**

A system 100 for measuring torque for a gas turbine engine shaft is provided. The system 100 can include a torque sensor 104 positioned at an engine shaft 34, 36, 38, 42, 44. The torque sensor 104, itself, can include a strain sensor 114 for obtaining a strain measurement of the engine shaft 34, 36, 38, 42, 44 and a temperature sensor 116 for obtaining a temperature measurement of the engine shaft 34, 36, 38, 42, 44. The system 100 can also include a wireless communication element 120 operably connected to the torque sensor 104 for transferring the strain measurement and the temperature measurement. In addition, one or more memory storage units 112 co-located with the torque sensor 104 can be provided. The one or more memory storage units 112 can store calibration information for the system 100. The calibration information is used by one or more processors 110 to calibrate the strain measurement obtained by the strain and the temperature measurement obtained by the temperature sensor 116. Methods of using the system 100 are also provided.

## Description

### FIELD

The present subject matter relates generally to systems and methods for measuring torque.

### BACKGROUND

Measuring torque supplied by, and to, a rotating shaft can be an important operation for many rotating machines. In the field of gas turbine engines, it is especially important to closely monitor and accurately measure the torque output of the engine to understand engine performance and health. By closely monitoring output torque values, potential problems may be identified before they occur. For instance, lower than expected torque output may be indicative of sub-optimal engine operation. In addition, output torque values may be used to estimate the life cycle of various engine components. Real time measurement of output torque values may permit the estimations of the life of an engine component to be repeatedly updated and revised. Moreover, real time measurement of output torque may be used to guarantee that the required output power is available at any given time.

Of course, measurements of torque are only useful to the degree that they can be considered accurate. Current methods for measuring torque are generally limited in their ability to consistently gather accurate information from a rotating shaft. For instance, some existing systems rely on reluctance sensors to monitor shaft rotation. Such systems must use rotational readings to estimate shaft strain generated at the shaft away from the sensor location. However, by relying on rotational readings alone, relevant information on strain may be lost and lead to inaccurate torque measurements.

Other systems may detect shaft strain in order to determine torque. However shaft strain, expansion, or twist alone may fail to accurately measure torque. Most rotating shafts will be subjected to significant strains, not only due to rotational forces and torque, but to additional factors, such as temperature, bending, and vibration. Although these additional factors may be insignificant to strain measured in some applications, they can be quite significant in understanding the performance and health of a gas turbine engine. The high-temperatures and environmental variations which gas turbine engine components are subjected to can greatly increase the strain to the engine's various rotational systems. Therefore, measuring strain without understanding the contributions due to temperature and other factors of variation may not provide an accurate indication of the torque output of a gas turbine engine.

Moreover, existing strain-based sensing systems often require regular service in order to provide accurate strain measurements due to, for instance, the effects of long term drift or reliability of these systems. Operation of the measured part or apparatus must be ceased in order to calibrate or recalibrate the sensing systems. In the case of a gas turbine engine, the maintenance for calibration or recalibration can be time consuming and expensive.

As a result, there is a need for a torque sensing system which can provide accurate real-time measurements of torque in a gas turbine engine. There is further need for a system that can account for operational variations to which the engine will be subjected.

### BRIEF DESCRIPTION

Aspects and advantages of the invention will be set forth in part in the following description, or may be obvious from the description, or may be learned through practice of the invention.

One example aspect of the present disclosure is directed to a system for measuring torque for a gas turbine engine shaft. The system can include a torque sensor positioned at an engine shaft. The torque sensor, itself, can include a strain sensor for obtaining a strain measurement of the engine shaft and a temperature sensor for obtaining a temperature measurement of the engine shaft. The system can also include a wireless communication element operably connected to the torque sensor for transferring the strain measurement and the temperature measurement. In addition, one or more memory storage units co-located with the torque sensor can be provided. The one or more memory storage units can store calibration information for the system. The calibration information is used by one or more processors to calibrate the strain measurement obtained by the strain sensor and the temperature measurement obtained by the temperature sensor.

In accordance with another example aspect of the present disclosure, a method for measuring torque for a gas turbine engine shaft is provided. The method can include obtaining a strain measurement of an engine shaft from a strain sensor positioned at an engine shaft, as well as obtaining a temperature measurement from a temperature sensor positioned at the engine shaft. The method can further include obtaining calibration information from one or more memory storage units co-located with the strain sensor. Moreover, the method can include determining a torque measurement based at least in part on the strain measurement, the temperature measurement, and calibration information.

Variations and modifications can be made to these example embodiments of the present disclosure.

These and other features, aspects and advantages of the present invention will become better understood with reference to the following description and appended claims. The accompanying drawings, which are incorporated in and constitute a part of this specification, illustrate aspects of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a cross-sectional schematic illustration of an example gas turbine engine;
FIG. 2 provides a schematic side view of an example system according to embodiments of present disclosure;
FIG. 3 provides a schematic view of an example system according to embodiments of the present disclosure;
FIG. 4 provides a schematic front view of an example system according to embodiments of the present disclosure;
FIG. 5 provides a schematic view of an example system according to embodiments of the present disclosure;
FIG. 6 provides a schematic view of an example system according to embodiments of the present disclosure; and
FIG. 7 provides a flow chart illustrating a method for calibrated torque shaft sensing according to example embodiments of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first," "second," and "third" may be used interchangeably to distinguish one component from another and are not intended to signify location or importance of the individual components.

Further, as used herein, the terms "axial" or "axially" refer to a dimension along a longitudinal axis of an engine. The term "forward" used in conjunction with "axial" or "axially" refers to a direction toward the engine inlet, or a component being relatively closer to the engine inlet as compared to another component. The term "rear" used in conjunction with "axial" or "axially" refers to a direction toward the engine nozzle, or a component being relatively closer to the engine nozzle as compared to another component. The terms "radial" or "radially" refer to a dimension extending between a center longitudinal axis of the engine and an outer engine circumference.

Example aspects of the present disclosure include a system and method for accurately measuring the torque to which one or more engine shafts are subjected. The system can be fully calibrated to inherently compensate for various factors that might otherwise impair accuracy. Moreover, the system can collect data directly at the engine shaft and wirelessly transmit its readings and calibration information to a monitor or controller distinct and separate from the engine shaft.

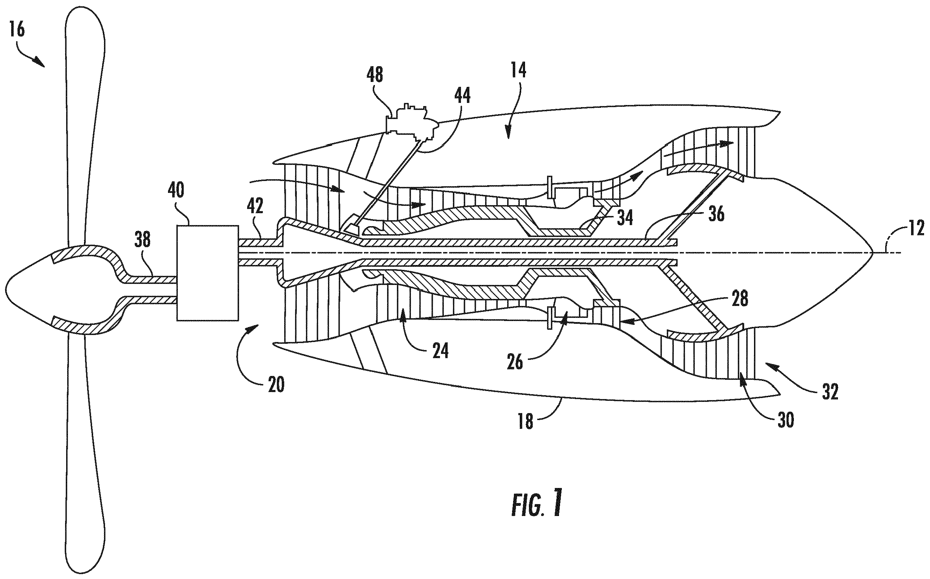

Referring now to the drawings, FIG. 1 is a schematic cross-sectional view of an example high-bypass turboprop type engine 10, herein referred to as "turboprop 10," as it can incorporate various embodiments of the present disclosure. In addition, although an example turboprop embodiment is shown, it is anticipated that the present disclosure can be equally applicable to other turbine-powered engines or rotary machines that include a shaft, such as an open rotor engine, a turboshaft engine, a turbofan engine, or other rotary machine.

As shown in FIG. 1, the turboprop 10 has a longitudinal or axial centerline axis 12 that extends therethrough for reference purposes. In general, the turboprop 10 can include a core turbine engine 14 disposed downstream from a fan section 16. The core turbine engine 14 can generally include a substantially tubular outer casing 18 that defines an annular inlet 20. The outer casing 18 can be formed from multiple casings. Optionally, the outer casing 18 encases, in serial flow relationship, a compressor section having a booster or low pressure (LP) compressor 22, a high pressure (HP) compressor 24, a combustion section 26, a turbine section including a high pressure (HP) turbine 28, a low pressure (LP) turbine 30, and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The (LP) spool 36 can also be connected to a fan spool or shaft 38 of the fan section 16. In particular embodiments, the (LP) spool 36 can be connected directly to the fan spool 38, such as in a direct-drive configuration. In alternative configurations, the (LP) spool 36 can be connected to the fan spool 38 via a speed reduction device 40, such as a reduction gear gearbox in an indirect-drive or geared-drive configuration. Such speed reduction devices can be included between any suitable shafts/spools, such as an engine coupling shaft 42, within the engine 10 as desired or required.

The example turboprop embodiment 10 also includes a radial driveshaft or power take-off shaft 44 that extends from core turbine engine 14 for connection with an accessory gearbox 48. During normal operation, the radial driveshaft 44 transfers power from the engine core 14 to the accessory gearbox 48. During engine startup, the radial driveshaft 44 can also transfer power from a starter located in the accessory gearbox 48 to the engine core 14.

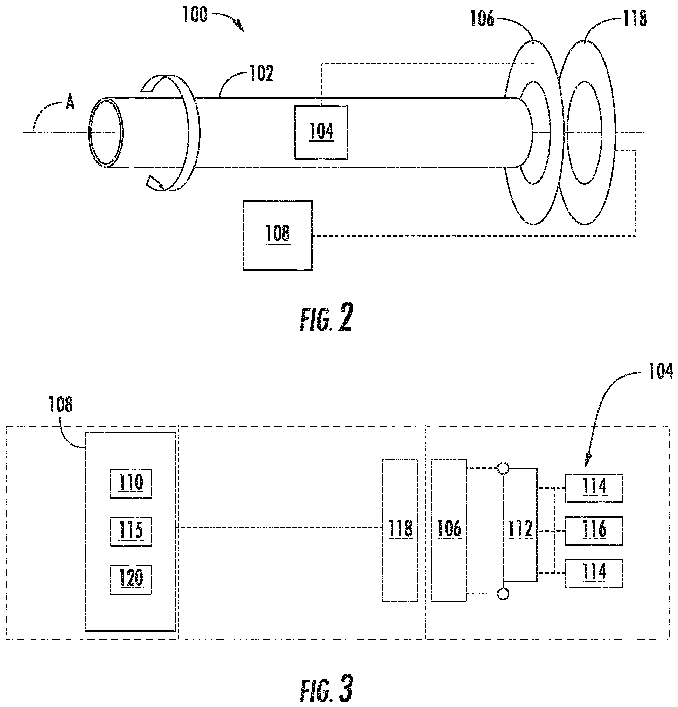

Turning to FIG. 2, one or more engine shafts 102 extending along a rotational axis A can have a torque-measuring system 100 disposed at least partially on or within the engine shaft 102. The engine shaft 102 can include the power take-off shaft 44, low pressure turbine shaft 36, high pressure turbine shaft 34, fan shaft 38, or engine coupling shaft 42, as described above with respect to FIG. 1.

As illustrated in FIG. 2, an example embodiment of the system 100 includes a torque sensor 104 positioned on the engine shaft 102. Also included is a wireless communications element operably connected to the torque sensor 104. For instance, the wireless communications element can include a sensor antenna 106 that is electrically connected to the torque sensor 104. As shown, a controller 108 can be further included at a remote location apart from the engine shaft 102 in operable communication with the sensor antenna 106 via another wireless communications module-for example, the stationary antenna 118.

The torque sensor 104 can be configured to measure at least a portion of strain, which the controller 108 can use to help calculate an output torque value (e.g., an overall value of dynamic rotational torque which is generated through the core engine 14). Although conventional systems have been unable to provide calibrated torque sensors within these extreme engine environments of a core engine 14, positioning the torque sensor 104 directly on the engine shaft 102 may advantageously reduce the need to infer or indirectly estimate the torque at the engine shaft 102. Moreover, the torque sensor 104 can be positioned at a non-parallel torque section of the engine shaft 102 (e.g., a shaft section that does not include multiple torque inputs and/or outputs). In such embodiments, the core engine 14 can include a singular torque path free of any alternate torque paths. The torque sensor 104 can, thereby, be subjected to and measure the entire rotational torque being generated through the engine core 14. In addition, positioning the torque sensor 104 on a non-parallel torque section may advantageously permit consistent measurement of torque output.

As shown, the example system 100 of FIG. 2 includes a sensor antenna 106 positioned on the engine shaft 102. The sensor antenna 106 can be electrically connected to the torque sensor 104. During use, measurements obtained at the torque sensor 104 can be transmitted to the sensor antenna 106 and, subsequently, the controller 108. In some embodiments, the sensor antenna 106 is rotationally fixed to the engine shaft 102. Therefore, rotation of the engine shaft 102 can be transferred to, and mirrored by, the sensor antenna 106. Moreover, as illustrated in FIG. 2, the sensor antenna 106 of some embodiments is wrapped about the engine shaft 102, i.e., about the rotational axis A of the engine shaft 102. A concentric stationary antenna 118 can be wirelessly matched to the sensor antenna 106 and operably connected to the controller 108. Although the concentric stationary antenna 118 can be coaxial with the sensor antenna 106 and engine shaft 102, the stationary antenna 118 is rotationally isolated from the engine shaft 102. As a result, rotation of the engine shaft 102 is not transferred to the stationary antenna 118. Optionally, the rotational sensor antenna 106 and stationary antenna 118 can be coaxially located and/or axially-spaced, as depicted in FIG. 2.

FIG. 3 depicts a schematic view of a system according to an example embodiment of the present disclosure. As illustrated, each torque sensor 104 can include one or more strain sensors 114. As the engine shaft 102 is rotated, deformation of or measured by the strain sensor(s) 114 can be directly detected, recorded, and/or measured. During operation of the system 100, strain measurements obtained from the strain sensors(s) 114 can be selectively transmitted to the controller 108, e.g., via the sensor antenna 106, and used to calculate torque.

The example embodiment of the torque sensor 104 shown in FIG. 3 includes at least two strain sensors 114. Each strain sensors 114 can be configured to detect discrete strain elements (e.g., tension strain and compression strain). Moreover, the two strain sensors 114 can be configured to receive and detect a biaxial strain field (e.g., tension strain and compression strain at +/- 45° from the A axis of the substrate) while the temperature sensor 116 detects temperature at the location of each torque sensor 104. In some embodiments, the strain sensor 114 can include one or more direct write strain sensor, radio-frequency identification sensor, surface acoustic wave sensor, bulk acoustic wave sensor, half-bridge strain gauge sensor, or full-bridge strain gauge sensor.

As shown in FIG. 3, certain embodiments of the torque sensor 104 can further include a temperature sensor 116 separate and discrete from the strain sensor(s) 114. Advantageously, the temperature sensor 116 can facilitate accurate temperature measurements directly on the engine shaft 102. Moreover, the temperature measurements obtained from the temperature sensor 116 can be transmitted as a temperature value signal to the controller 108, e.g., via the sensor antenna 106, and is used calculate torque. For instance, a temperature measurement can be used to calculate the influence of engine temperature on a strain sensor 114 (e.g., the degree to which a strain sensor 114 is known be inaccurate at a given temperature). The strain measurement can be accordingly adjusted to provide a more accurate torque measurement. Optional embodiments of the temperature sensor 116 can include a surface acoustic wave sensor, bulk acoustic wave sensor, resistance temperature detection sensor, thermocouple sensor, or pyrometric sensor.

The system 100 can further include a controller 108 having one or more processor 110. The processor(s) 110 can be configured for receiving the calibration parameters of the sensor 104 and generating calibrated torque values according to one or more sensor signals received from the torque sensor 104. Optionally, the controller 108 can include a full authority digital engine control (FADEC), or another suitable engine control unit. In some embodiments, the controller 108 includes a discrete processor memory unit 115 and wireless interrogator 120 in operable communication with the processor(s) 110.

As shown, the processor(s) 110 can be in operable communication with the torque sensor 104 and a co-located memory storage unit 112. The processor(s) 110 can include a digital signal processor (DSP), an application specific integrated circuit (ASIC), a field programmable gate array (FPGA) or other programmable logic device, discrete gate or transistor logic, discrete hardware components, or any combination thereof designed and programmed to perform or cause the performance of the functions described herein. The processor(s) 110 can also include a microprocessor, or a combination of the aforementioned devices (e.g., a combination of a DSP and a microprocessor, a plurality of microprocessors, one or more microprocessors in conjunction with a DSP core, or any other such configuration).

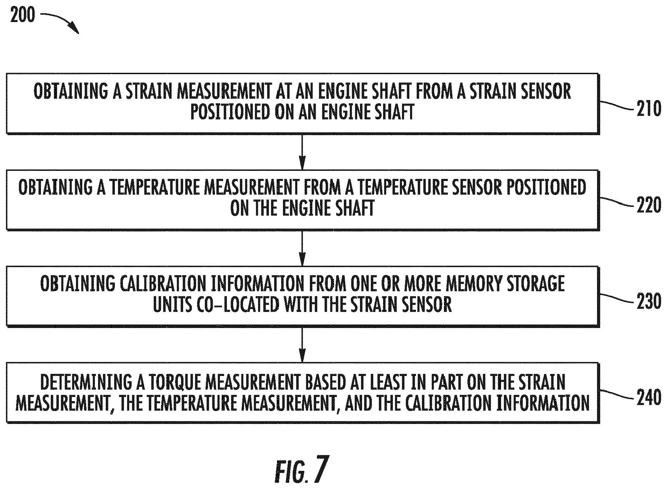

In optional embodiments, one or more memory units 115 can be provided and comprise one or more memory elements. For instance, the memory unit(s) 115 can include, but are not limited to, computer readable medium (e.g., random access memory (RAM)), computer readable non-volatile medium (e.g., a flash memory, EEPROM, NVRAM or FRAM), and/or other suitable memory elements. The memory units 115 can store information accessible by processor(s) 110, including instructions that can be executed by processor(s) or information about the engine shaft 102 or sensor(s) 104. For example, the instructions can be software or any set of instructions that when executed by the processor(s) 110, cause the processor(s) 110 to perform operations. For the embodiment depicted, the instructions can include a software package configured to operate the system 100 to, for instance, implement the example method (200) described below with reference to FIG. 7.

As shown in the example embodiment of FIG. 3, the wireless interrogator 120 is operably and/or electrically connected to the stationary antenna 118. Optionally, the wireless interrogator 120 can be configured as a transmitter and/or receiver (e.g., transceiver) to communicate with the torque sensor 104 through the antenna(s) 106 and/or 118. In certain embodiments, the wireless interrogator is configured in wireless operational communication with the sensor antenna 106. In some embodiments, the wireless interrogator 120 is also configured in operable communication with the processor(s) 110. Specifically, the wireless interrogator 120 of certain embodiments is positioned within the controller 108 and/or configured as part of the controller 108. During use, the interrogator 120 can initiate and/or receive a data transmission, as will be described below. In specific embodiments, the interrogator 120 can include a passive radio-frequency interrogator, an active radio-frequency interrogator, a magnetic interrogator, or an optical interrogator.

In optional embodiments, the interrogator 120 is operably coupled to the torque sensor 104 through one or more wireless network. In specific embodiments, the controller 108 can be configured to transmit an electronic signal (e.g., an interrogator signal) across a communications network via one or more wireless protocol standards from the interrogator 120 and/or processor(s) 110 to the torque sensor 104. For example, in certain example embodiments, the controller 108 can be configured to communicate with the torque sensor 104 using a point-to point communication networks (such as radio frequency identification networks, near field communications networks, etc.), a wireless sensor network (such as a Bluetooth communication network), a wireless local area network (WLAN), or other cellular or wireless communications networks. In some such embodiments, the controller 108, the interrogator 120, and/or the torque sensor 104 can include matching wireless communications modules to transmit and/or receive wireless electronic signals according to the same wireless protocol standard. In alternative embodiments, the controller 108 can be configured to communicate with the torque sensor 104 through a raw radio frequency signal, optical signal, or magnetic signal.

As illustrated in FIG. 3, one or more memory storage units 112 can be co-located with the torque sensor 104 and operably connected with the controller 108 and/or processor(s) 110. Accordingly, the memory storage unit(s) 112 can be disposed on the engine shaft 102 with the torque sensor 104 or positioned in an adjacent static engine location rotationally isolated from the engine shaft 102, e.g., against the stationary antenna 118 or in a circular bearing housing ring (not pictured) holding the engine shaft 102 in coaxial rotation. In embodiments wherein the memory storage unit(s) 112 is disposed on the engine shaft 102, the memory storage unit(s) 112 can be disposed locally, assembled with, on, or within the engine shaft 102.

The memory storage unit(s) 112 can store calibration information for the sensor 104 for calibrating or adjusting one or more sensor measurements. The memory storage unit(s) 112 can include, but is not limited to, computer readable medium (e.g., random access memory (RAM)), computer readable non-volatile medium (e.g., a flash memory, EEPROM, NVRAM or FRAM), and/or other suitable memory elements. As shown, the memory storage unit(s) 112 can be operably connected with the controller 108 and processor(s) 110 (e.g., via the sensor antenna 106, calibration antenna 118, and/or wireless interrogator 120, similarly or in addition to the torque sensor 104). Accordingly, the calibration information can be received by the processor(s) 110 as part of the sensor value signals initially transmitted from the torque sensor 104 (e.g., as a single output signal).

The calibration information can provide a known or estimated relationship between a measured value and an actual or accurate value. Specifically, information concerning one or more correction parameter can be included as part of the calibration information stored on the memory storage unit(s) 112. In certain embodiments, an engine model is further included. The engine condition model can be included in the controller 108 and/or processor(s) 110 and associate the correction parameter with measurements obtained from the torque sensor 104. For instance, the engine condition models can correlate a measured strain and/or temperature value against a model strain and/or temperature value. In other words, the engine condition models of such embodiments establishes a relationship between the measurements that are initially obtained from the torque sensor (i.e., the measured values) and a more accurate value of the strain and/or temperature conditions at the engine shaft 102 (i.e., the rectified values). In one example embodiment, once strain and temperature measurements are obtained, the engine condition model can allow the obtained measurements to be used with the correction parameter to generate a rectified torque value. Optionally, the engine condition model can include a suitable algorithm, predetermined data graph, or correlated reference table that links a measured value to a rectified value.

In some embodiments, the engine condition model can be contingent upon predetermined historical data values. The historical data values can be provided from past values obtained by testing at known conditions. For example, the correction parameter can adjust a newly-obtained strain measurement based on past measurements at one or more known temperature. In alternative or additional embodiments, the correction parameter can adjust an obtained strain measurement based on past measurements at one or more known rotational velocities. Moreover, the correction parameter can adjust an obtained strain measurement based on other measurements, such as vibration at the engine shaft 102, exhaust gas temperature, engine inlet temperature, or engine combustion pressure. Thus, the correction parameter can include rotational velocity of the engine shaft 102, temperature at the engine shaft 102, vibration at the engine shaft 102, exhaust gas temperature, inlet temperature, or engine combustion pressure.

In optional embodiments, the calibration information derived for a single system unit can be included in a plurality of system units. In other words, the memory storage units 112 of multiple discrete systems 100 will include substantially identical calibration information. After a first system unit is calibrated, that calibration information can be subsequently incorporated in succeeding system units. Advantageously, this may allow multiple system units to be calibrated according to the engine condition model derived for a single unit, reducing calibration and service time required for each system unit

As shown in FIG. 3, the processor(s) 110 is arranged to receive a sensor measurement (e.g., sensor value signal) from one or more strain sensors 114 and/or temperature sensor 116 during use of the system 100. In other words, the processor(s) 110 can be arranged to receive one or more strain and/or temperature measurements. For instance, in an example embodiment, the system is configured to provide a strain measurement from a strain sensor 114 via the wireless interrogator 120 and antennas 106 and 118. Specifically, the processor(s) 110 is configured to initiate an interrogation signal at the wireless interrogator 120. The interrogation signal is transferred to the torque sensor 104 through the stationary antenna 118 and sensor antenna 106. The torque sensor 104 can be further configured to transmit a strain measurement upon receiving the interrogation signal. The strain measurement can, therefore, be transmitted through the sensor antenna 106 and stationary antenna 118 to the controller 108. Optionally, the strain measurement can be transmitted to the wireless interrogator 120 before being received by the processor(s) 110.

Some embodiments, such as the exemplary embodiment of FIG. 3, can also be configured to similarly provide a temperature measurement from a temperature sensor 116. In an exemplary embodiment, the processor(s) 110 is configured to initiate the interrogation signal at the wireless interrogator 120. The torque sensor 104 is further configured to transmit a temperature measurement upon receiving an interrogation signal. In response to the interrogation signal, the temperature measurement can be transmitted through the sensor antenna 106 and stationary antenna 118 to the controller 108. The temperature measurement can be transmitted in isolation or together with a strain measurement (e.g., as a single output signal). In some embodiments, the temperature measurement can be transmitted to the wireless interrogator 120 before being received by the processor(s) 110.

In additional embodiments, the processor(s) 110 is configured to receive calibration information stored at the memory storage unit(s) 112. Specifically, calibration information can be electronically or wirelessly transmitted to the processor(s) 110 from the memory storage unit(s) 112. For instance, in certain embodiments, calibration information is provided from the memory storage unit(s) 112 via the wireless interrogator 120 and antennas 106 and 118. In some such embodiments, calibration information is provided in response to an interrogation signal initiated by the processor(s) 110 at the wireless interrogator 120. Similar to the interrogation signal described above, the interrogation signal to the memory storage unit(s) 112 can be transferred via the stationary antenna 118 and sensor antenna 106. In response to the interrogation signal, calibration information can be transmitted through the sensor antenna 106 and stationary antenna 118 to the controller 108. The calibration information can be transmitted in isolation or together with a strain measurement and/or temperature measurement (e.g., as a single output signal). Optionally, the calibration information can be transmitted to the wireless interrogator 120 before being received by the processor(s) 110.

The processor(s) 110 can be configured to use measured values and calibration information to calculate a measured torque value and/or adjust a measured sensor value. For instance, in an embodiment wherein the processor(s) 110 receives a strain measurement from the strain sensors 114 and a correction parameter from the memory storage unit(s) 112, the processor(s) can subsequently apply the correction parameter to the strain measurement. According to the correction parameter, the received strain measurement can be either increased or decreased.

In additional or alternative embodiments, the processor(s) 110 is configured to adjust a first sensor measurement by a second sensor measurement. Advantageously, the processor(s) 110 can, thus, provide contemporaneous calibration of the sensor 104. In specific embodiments, the processor(s) 110 is configured to receive a strain measurement from one or more strain sensor 114 and a temperature measurement from one or more temperature sensor 116. Such embodiments of the processor(s) 110 can be further configured to adjust the received strain measurement according to the received temperature measurement. Specifically, the received strain measurement can be altered to distinguish between rotational strain (e.g., strain derived from a rotational torque output) and thermal strain (e.g., strain derived from thermal expansion or contraction of the engine shaft 102), as well as the shaft material's modulus change due to the changes in temperature. Accordingly, thermal strain can be distinguished from received strain measurements to provide a rotational strain value for the accurate calculated torque measurement.

In some embodiments, the processor(s) 110 is further configured to measure or calculate an output torque value based, at least in part, on information or values received from the torque sensor 104. For instance, in one embodiment, once the processor(s) 110 rectifies or adjusts a strain measurement received from the strain sensor 114, the processor(s) 110 can calculate a calibrated torque measurement value for rotational torque occurring about the rotational axis A of the engine shaft 102. The calculation can be made according to any suitable method or algorithm without deviating from the scope of the present disclosure.

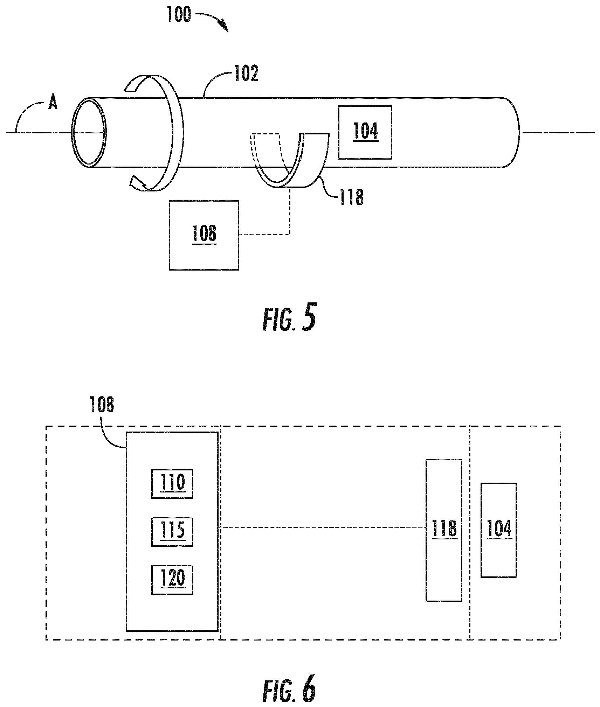

Turning FIGS. 5 and 6, it is understood that these exemplary embodiments may be considered substantially identical to those discussed above, unless otherwise indicated. For instance, as shown in FIGS. 5 and 6, in some embodiments, the stationary antenna 118 can be wirelessly matched to directly communicate with the torque sensor 104. As shown, the stationary antenna 118 can be disposed at least partially about the rotational axis A, and rotationally isolated from the engine shaft 102. For the sake of clarity, the illustrated stationary antenna 118 of FIG. 5 is shown as being axially-spaced from the torque sensor 104. However, it is envisioned that the stationary antenna 118 of certain embodiments can be axially-aligned to the torque sensor 104, i.e., at substantially the same position along the rotational axis 102, thereby facilitating a wireless operative connection between the static antenna 118 and torque sensor 104. During operation, the stationary antenna may wireless communicate with the torque sensor 104 and detect rotation thereof. Optionally, the torque sensor 104 can include a non-intrusive strain sensor at the engine shaft 102. In some such embodiments, the strain sensor includes a magnetostrictive sensor, magnetoelastic sensor, magnetoresistive sensor, or optical moire sensor

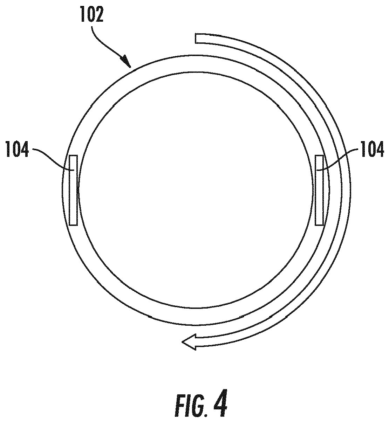

Turning to FIG. 4, in an example embodiment, multiple torque sensors 104 are joined to the engine shaft 102. Specifically, two torque sensors 104 are included at opposite circumferential positions along the engine shaft 102. In optional embodiments, the torque sensors 104 can be separate SAW sensors joined to the engine shaft 102 via any suitable connection or method. For instance, the torque sensors 104 can be joined to the engine shaft 102 by a suitable adhesive, welding bead, mechanical connector, or integral formation with the engine shaft 102. Two strain sensors 114 and at least one temperature sensor 116 (see FIG. 3) can be provided within each SAW torque sensor 104.

Although two torque sensors 104 are shown in FIG. 4, alternative embodiments can include more or less torque sensors 104 (e.g., only one torque sensor or more than two torque sensors) according to the configuration of the torque sensor 104. Moreover, as should be appreciated to those skilled in the art, using the disclosures provided herein, measurements of deformation between the torque sensors 104 can help determine the amount of torque, strain rate, fatigue, stress, bending, etc. at that region of the engine shaft 102.

FIG. 7 depicts a flow diagram of an example method (200) according to example embodiments of the present disclosure. The method (200) can be performed, for instance, by the processor(s) 110. FIG. 7 depicts steps performed in a particular order for purpose of illustration and discussion. Those of ordinary skill in the art, using the disclosures provided herein, will understand that the steps of any of the methods disclosed herein can be modified, adapted, rearranged, omitted, or expanded in various ways without deviating from the scope of the present disclosure.

At (210), the method can include obtaining a strain measurement at an engine shaft from a strain sensor positioned on an engine shaft. Specifically, the engine shaft can include a power take-off shaft, a low pressure turbine shaft, a high pressure turbine shaft, a fan shaft, an engine coupling shaft, or other suitable rotating shaft. In some embodiments, the strain sensor can include a direct write strain sensor, radio-frequency identification sensor, surface acoustic wave sensor, bulk acoustic wave sensor, half-bridge strain gauge sensor, or full-bridge strain gauge sensor disposed at least partially on the engine shaft. In additional or alternative embodiments, the strain sensor can include a magnetostrictive sensor, magnetoelastic sensor, magnetoresistive sensor, or optical moire sensor. Moreover, in some embodiments, (210) can include receiving a strain measurement wirelessly from the strain sensor, as described above.

At (220), the method (200) includes obtaining a temperature measurement from a temperature sensor positioned on the engine shaft. The temperature sensor can include a surface acoustic wave sensor, bulk acoustic wave sensor, resistance temperature detection sensor, thermocouple sensor, or pyrometric sensor disposed at least partially on the engine shaft, and can be further enhanced using an engine thermal model. Optionally, (210) further includes receiving a temperature measurement wirelessly from the temperature sensor, as described above.

At (230), the method (200) includes obtaining calibration information from one or more memory storage units co-located with the strain sensor. The calibration information can include a correction parameter, as discussed above. For instance, the correction parameter of some embodiments a rotational velocity of the engine shaft, temperature at the engine shaft, vibration at the engine shaft, exhaust gas temperature, inlet temperature, or engine combustion pressure. Moreover, an engine condition model can be associated with the correction parameter.

Optionally, one or more of the steps (210), (220), or (230) can be contingent upon transmission of a wireless interrogation signal. As a result, optional embodiments of the method (200) can include initiating a wireless interrogation signal at a wireless interrogator, as described above. In certain embodiments, the wireless interrogator is operably connected to a processor(s) and includes a passive radio-frequency interrogator, an active radio-frequency interrogator, or an optical interrogator.

At (240), the method (200) includes determining a torque measurement based at least in part on the strain measurement, the temperature measurement, and the calibration information. As discussed above, the engine condition model can be configured to correlate measured strain and/or temperature values to one or more rectified values. In certain embodiments, a rotational strain of the engine shaft is distinguished from thermal strain. Moreover, a strain measurement can be adjusted based, at least in part on, the determined thermal strain. Thus, a rotational strain value that excludes thermal strain may be provided.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A system for measuring torque for a gas turbine engine shaft, the system comprising:
   a torque sensor positioned at an engine shaft, the torque sensor comprising a strain sensor for obtaining a strain measurement of the engine shaft and a temperature sensor for obtaining a temperature measurement of the engine shaft;
   a wireless communication element operably connected to the torque sensor for transferring the strain measurement and the temperature measurement; and
   one or more memory storage units co-located with the torque sensor, the one or more memory storage units storing calibration information for the torque sensor;
   wherein the calibration information is used by one or more processors to calibrate the strain measurement obtained by the strain sensor and the temperature measurement obtained by the temperature sensor.
2. The system of clause 1, wherein the temperature sensor includes a surface acoustic wave sensor, bulk acoustic wave sensor, resistance temperature detection sensor, thermocouple sensor, or pyrometric sensor.
3. The system of clause 1 or 2, wherein the one or more memory storage units is disposed on the engine shaft.
4. The system of any preceding clause, wherein the one or more memory storage units is disposed adjacent to the torque sensor at a static engine location.
5. The system of any preceding clause, further comprising a sensor antenna positioned on the engine shaft and electrically connected with the torque sensor, wherein the strain sensor includes a direct write strain sensor, radio-frequency identification sensor, surface acoustic wave sensor, bulk acoustic wave sensor, half-bridge strain gauge sensor, or full-bridge strain gauge sensor, and the system includes a sensor antenna positioned on the engine shaft and electrically connected with the torque sensor.
6. The system of any preceding clause, wherein the strain sensor includes a magnetostrictive sensor, magnetoelastic sensor, magnetoresistive sensor, or optical moire sensor.
7. The system of any preceding clause, wherein the torque sensor is positioned directly on a power take-off shaft, a low pressure turbine shaft, a high pressure turbine shaft, fan shaft, or an engine coupling shaft of a gas turbine engine.
8. The system of any preceding clause, wherein the one or more processors are configured to implement a correction parameter for altering a strain measurement according to an engine condition model associated with the correction parameter.
9. The system of any preceding clause, wherein the correction parameter includes rotational velocity of the engine shaft, temperature at the engine shaft, vibration at the engine shaft, exhaust gas temperature, inlet temperature, or engine combustion pressure.
10. The system of any preceding clause, wherein the wireless communications element includes a wireless interrogator.
11. The system of any preceding clause, wherein the wireless interrogator includes a passive radio-frequency interrogator, an active radio-frequency interrogator, magnetic interrogator, or an optical interrogator.
12. A method for measuring torque for a gas turbine engine shaft, the method comprising:
   obtaining a strain measurement of an engine shaft from a strain sensor positioned at an engine shaft;
   obtaining a temperature measurement from a temperature sensor positioned at the engine shaft;
   obtaining calibration information from one or more memory storage units co-located with the strain sensor; and
   determining a torque measurement based at least in part on the strain measurement, the temperature measurement, and the calibration information.
13. The method of any preceding clause, wherein the strain sensor comprises a direct write strain sensor, radio-frequency identification sensor, surface acoustic wave sensor, bulk acoustic wave sensor, half-bridge strain gauge sensor, or full-bridge strain gauge sensor disposed at least partially on the engine shaft.
14. The method of any preceding clause, wherein the strain sensor includes a magnetostrictive sensor, magnetoelastic sensor, magnetoresistive sensor, or optical moire sensor.
15. The method of any preceding clause, wherein determining a torque measurement includes determining a thermal strain, and wherein the strain measurement is adjusted based at least in part on the determined thermal strain.
16. The method of any preceding clause, wherein the temperature sensor comprises a surface acoustic wave sensor, bulk acoustic wave sensor, resistance temperature detection sensor, thermocouple sensor, or pyrometric sensor disposed at least partially on the engine shaft.
17. The method of any preceding clause, wherein the engine shaft is a power take-off shaft, a low pressure turbine shaft, a high pressure turbine shaft, a fan shaft, or an engine coupling shaft.
18. The method of any preceding clause, wherein calibration information includes a correction parameter, and wherein the strain measurement is adjusted based at least in part on the correction parameter according to an engine condition model associated with the correction parameter.
19. The method of any preceding clause, wherein the correction parameter includes rotational velocity of the engine shaft, temperature at the engine shaft, vibration at the engine shaft, exhaust gas temperature, inlet temperature, or engine combustion pressure.
20. The method of any preceding clause, further comprising initiating a wireless interrogation signal at a wireless interrogator.

## Claims

1. A system (100) for measuring torque for a gas turbine engine shaft, the system (100) comprising:
a torque sensor (104) positioned at an engine shaft (34, 36, 38, 42, 44), the torque sensor (104) comprising a strain sensor (114) for obtaining a strain measurement of the engine shaft (34, 36, 38, 42, 44) and a temperature sensor (116) for obtaining a temperature measurement of the engine shaft (34, 36, 38, 42, 44);
a wireless communication element (120) operably connected to the torque sensor (104) for transferring the strain measurement and the temperature measurement; and
one or more memory storage units (112) co-located with the torque sensor (104), the one or more memory storage units (112) storing calibration information for the torque sensor (104);
wherein the calibration information is used by one or more processors (110) to calibrate the strain measurement obtained by the strain sensor (114) and the temperature measurement obtained by the temperature sensor (116).

2. The system (100) of claim 1, wherein the temperature sensor (116) includes a surface acoustic wave sensor, bulk acoustic wave sensor, resistance temperature detection sensor, thermocouple sensor, or pyrometric sensor, and further wherein the strain sensor (114) includes a magnetostrictive sensor, magnetoelastic sensor, magnetoresistive sensor, or optical moire sensor..

3. The system (100) of either of claim 1 or 2, wherein the one or more memory storage units (112) is disposed on the engine shaft (34, 36, 38, 42, 44).

4. The system (100) of any preceding claim, wherein the one or more memory storage units (112) is disposed adjacent to the torque sensor (104) at a static engine location.

5. The system (100) of any preceding claim, further comprising a sensor antenna (106) positioned on the engine shaft (34, 36, 38, 42, 44) and electrically connected with the torque sensor (104), wherein the strain sensor (114) includes a direct write strain sensor, radio-frequency identification sensor, surface acoustic wave sensor, bulk acoustic wave sensor, half-bridge strain gauge sensor, or full-bridge strain gauge sensor, and the system (100) includes a sensor antenna (106) positioned on the engine shaft (34, 36, 38, 42, 44) and electrically connected with the torque sensor (104).

6. The system (100) of any preceding claim, wherein the torque sensor (104) is positioned directly on a power take-off shaft, a low pressure turbine shaft, a high pressure turbine shaft, fan shaft, or an engine coupling shaft of a gas turbine engine.

7. The system (100) of any preceding claim, wherein the one or more processors are configured to implement a correction parameter for altering a strain measurement according to an engine condition model associated with the correction parameter.

8. The system (100) of claim 7, wherein the correction parameter includes rotational velocity of the engine shaft, temperature at the engine shaft, vibration at the engine shaft, exhaust gas temperature, inlet temperature, or engine combustion pressure.

9. The system (100) of any preceding clause, wherein the wireless communications element includes a wireless interrogator.

10. The system (100) of claim 8, wherein the wireless interrogator includes a passive radio-frequency interrogator, an active radio-frequency interrogator, magnetic interrogator, or an optical interrogator.

11. A method comprising:
obtaining a strain measurement of an engine shaft (34, 36, 38, 42, 44) from a strain sensor (114) positioned at an engine shaft (34, 36, 38, 42, 44);
obtaining a temperature measurement from a temperature sensor (116) positioned at the engine shaft (34, 36, 38, 42, 44);
obtaining calibration information from one or more memory storage units (112) co-located with the strain sensor (114); and
determining a torque measurement based at least in part on the strain measurement, the temperature measurement, and the calibration information.

12. The method (200) of claim 11, wherein determining a torque measurement includes determining a thermal strain, and wherein the strain measurement is adjusted based at least in part on the determined thermal strain.

13. The method (200) of either of claim 11 or 12, wherein calibration information includes a correction parameter, and wherein the strain measurement is adjusted based at least in part on the correction parameter according to an engine condition model associated with the correction parameter.

14. The method (200) of any of claims 11 to 13, wherein the correction parameter includes rotational velocity of the engine shaft (34, 36, 38, 42, 44), temperature at the engine shaft (34, 36, 38, 42, 44), vibration at the engine shaft (34, 36, 38, 42, 44), exhaust gas temperature, inlet temperature, or engine combustion pressure.

15. The method (200) of any of claims 11 to 14, further comprising initiating a wireless interrogation signal at a wireless interrogator (120).
